# EUROPEAN PATENT SPECIFICATION

(11) **EP 1 532 196 B1**
(45) Date of publication and mention of the grant of the patent: **29.06.2011**
(21) Application number: 03750420.6
(22) Date of filing: 21.08.2003
(51) Int. Cl.: C08J 5/00

(54) **METHOD OF PRODUCING COLOURED PLASTICS OR POLYMERIC COLOUR PARTICLES**
VERFAHREN ZUR HERSTELLUNG VON GEFÄRBTEM KUNSTSTOFF ODER POLYMEREN FARBPARTIKELN
PROCEDE DE PRODUCTION DE MATIERES PLASTIQUES COLOREES OU DE PARTICULES POLYMERIQUES COLOREES

(30) Priority: 30.08.2002 CH 148302
(43) Date of publication of application: 25.05.2005
(73) Proprietor: BASF SE, 67056 Ludwigshafen (DE)
(72) Inventor: CHRISTENSEN, Ian, Eltham, Victoria 3095 (AU)
(86) International application number: PCT/EP2003/009268
(87) International publication number: WO 2004/020505

(56) References cited:
- WO-A-02/059215
- WO-A-02/072707

## Description

The present invention relates to a method of producing coloured plastics or polymeric colour particles.

Dyes and their use in colouring plastics and polymeric particles are known. It has been found, however, that using the known dyes on their own for colouring plastics in the mass does not always fully meet the increased demands, especially with respect to light-fastness properties. There is accordingly a need for new colouring methods that yield colourations in the mass that have a high tinctorial strength and, especially, light fastness and high temperature light fastness and that exhibit good all-round fastness properties.

It has now been found, surprisingly, that the method according to the invention substantially meets the above criteria.

The present invention accordingly relates to a method of producing coloured plastics or polymeric colour particles, in which there is used the dye of formula 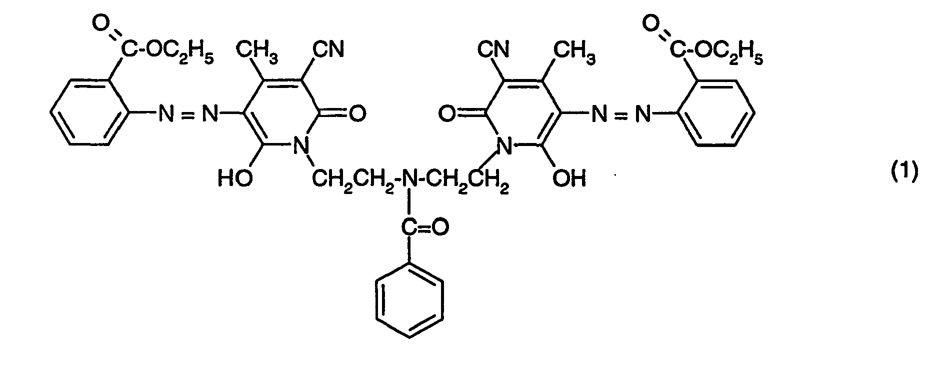 together with the dye of formula 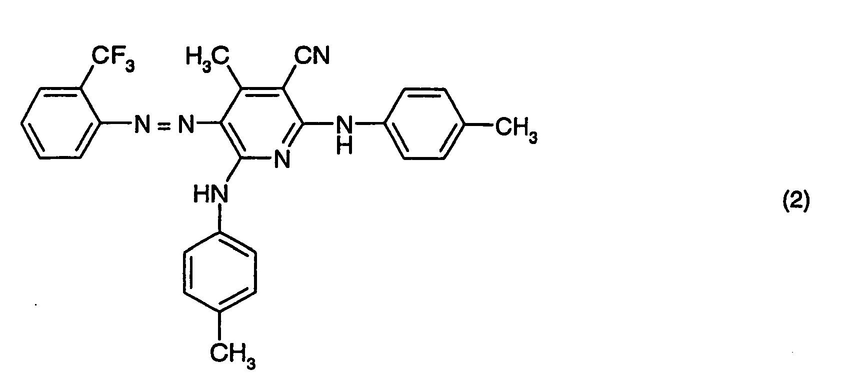 and a UV absorber
and, optionally, further dyes.

The amounts in which the dyes are admixed with the plastics or polymeric particles to be coloured can vary within wide limits depending on the desired depth of shade; in general, amounts of from 0.001 to 5 % by weight, especially from 0.01 to 2 % by weight, more especially from 0.03 to 0.5 % by weight, based on the material to be dyed, have proved to be advantageous.

UV absorbers suitable for the method according to the invention include especially 2-(2'-hydroxyphenyl)benzotriazoles, 2-hydroxybenzophenones, esters of substituted or unsubstituted benzoic acid, acrylates, oxamides, 2-(2-hydroxyphenyl)-1,3,5-triazines, monobenzoates of resorcinol and formamidines, and also a polyester UV absorber of formula 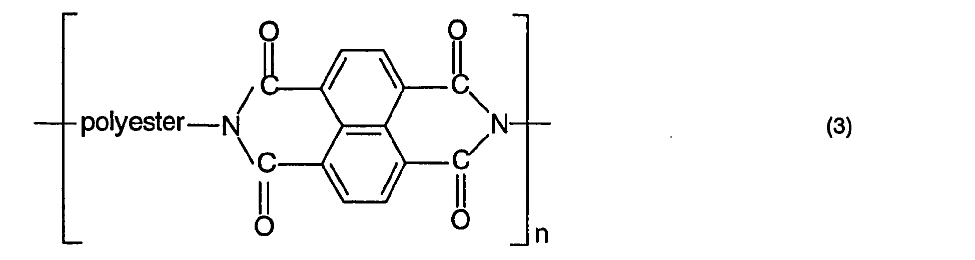 having a specific weight of from 1200 to 1400, preferably from 1300 to 1350, at 25°C.

From the class of the 2-(2'-hydroxyphenyl)benzotriazoles the following, for example, may be mentioned: 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-iso-octyloxycarbonylethyl)phenyl-benzotriazole, 2,2'-methylene-bis[4-(1,1,3,3-tetramethylbutyl)-6-benzotriazol-2-ylphenol]; the transesterification product of 2-[3'-tert-butyl-5'-(2-methoxycarbonylethyl)-2'-hydroxyphenyl]-2H-benzotriazole with polyethylene glycol 300; 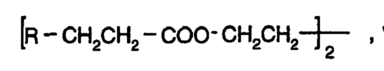 wherein

R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]benzotriazole; and 2-[2'-hydroxy-3'-(1,1,3,3-tetramethylbutyl)-5'-(α,α-dimethylbenzyl)phenyl]benzotriazole.

From the class of the 2-hydroxybenzophenones the following, for example, may be mentioned: 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

From the class of the 2-(2-hydroxyphenyl)-1,3,5-triazines the following, for example, may be mentioned: 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethyl-phenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropyloxy)phenyl]-4,6-bis(2,4-dimethylphenyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine and 2-(2-hydroxyphenyl)-4-(4-methoxyphenyl)-6-phenyl-1,3,5-triazine.

From the class of the oxamides the following, for example, may be mentioned: 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethyloxanilide and a mixture thereof with 2-ethoxy-2'-ethyl-5,4'-di-tert-butoxanilide, mixtures of o- and p-methoxy-disubstituted oxanilides and mixtures of o- and p-ethoxy-disubstituted oxanilides.

As esters of substituted or unsubstituted benzoic acid the following, for example, may be mentioned: 4-tert-butyl-phenyl salicylate, phenyl salicylates, octylphenyl salicylates, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate and 2-methyl-4,6-di-tert-butylphenyl 3,5-di-tert-butyl-4-hydroxybenzoate.

From the class of the acrylates the following, for example, may be mentioned: ethyl-α-cyano-β,β-diphenyl acrylate, isooctyl-α-cyano-β,β-diphenyl acrylate, methyl-α-methoxycarbonylcinnamate, methyl-α-cyano-β-methyl-p-methoxycinnamate, butyl-α-cyano-β-methyl-p-methoxycinnamate, methyl-α-methoxycarbonyl-p-methoxycinnamate and N-(β-methoxycarbonyl-β-cyanovinyl)-2-methylindoline.

A resorcinol monobenzoate is, for example, a compound of formula

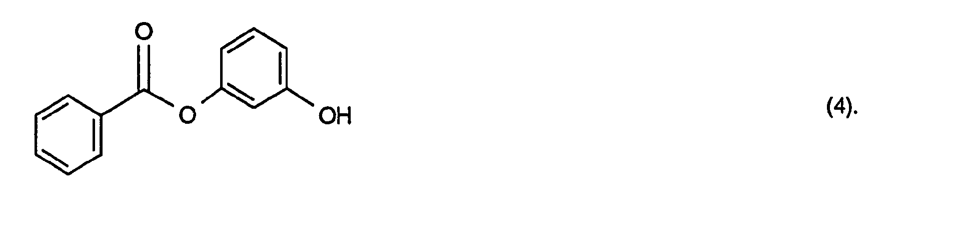

A formamidine is, for example, a compound of formula

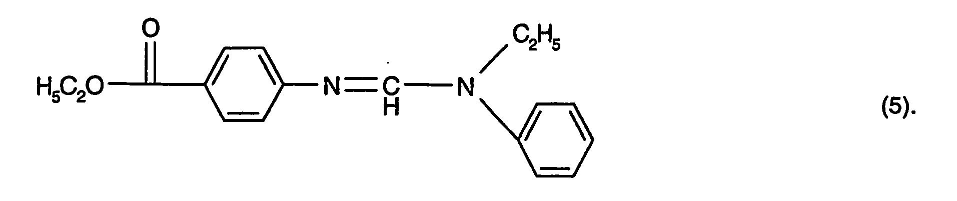

As UV absorbers it is also possible to use compositions comprising active methine compounds, for example unsubstituted or substituted malonate esters, as described, for example, in US-A-6 207 740, WO-A-02/14418, EP-A-0 350 386, US-A-4 661 566, US-A-4 749 772 and EP-A-0 272 692.

The amount of the UV absorber can vary within a wide range; advantageously from 0.01 to 1.0 % by weight, especially from 0.02 to 0.6 % by weight, and more especially from 0.05 to 0.4 % by weight of a UV absorber, based on the weight of the plastics or polymeric particles, is used.

The compounds of formulae (1) to (5) are known and can be prepared by known methods in a manner known *per* se.

The method, according to the invention, of producing coloured plastics or polymeric colour particles is carried out, for example, by admixing, with those substrates, the dyes of formulae (1) and (2) and a UV absorber using roll mills or mixing or grinding apparatuses, as a result of which the dye and the UV absorber are dissolved or finely dispersed in the high molecular weight material. Admixture of the dyes and UV absorber can be effected simultaneously or successively and the order of addition can be selected as desired.

The dyes of formulae (1) and (2) can also be used in combination with other dyes.

Preference is given to a combination of the dyes of formulae (1) and (2) and the dye of formula

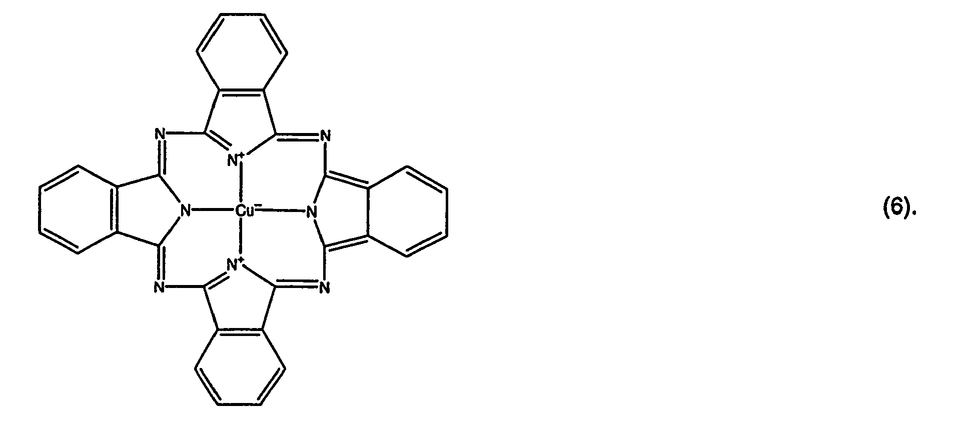

The high molecular weight organic material together with the admixed dyes and UV absorber is then processed using methods known *per se* such as, for example, calendering, compression moulding, extrusion, coating, spinning, pouring or injection moulding, as a result of which the coloured material obtains its final form.

Admixture of the dyes and the UV absorber can also be effected immediately prior to the actual processing step, for example by continuously and simultaneously feeding a dye in powder form, a UV absorber in powder form and a granulated or pulverulent, high molecular weight organic material and, optionally, also additional ingredients, such as, for example, additives, directly into the intake zone of an extruder wherein mixing occurs just before processing. Generally, however, it is preferable to mix the dye and the UV absorber into the high molecular weight organic material beforehand, since more uniformly coloured products can be obtained.

In order to produce non-rigid shaped articles or to reduce their brittleness, it is frequently desirable to add so-called plasticisers to the high molecular weight compounds prior to shaping. There may be used as plasticisers, for example, esters of phosphoric acid, phthalic acid or sebacic acid. In the method according to the invention, the plasticisers can be incorporated into the polymers before or after incorporation of the colorant. It is furthermore possible, in order to achieve different colour shades, also to add to the high molecular weight organic substances, in addition to the dyes of formulae (1) and (2), further dyes or other colorants in any amounts, optionally together with further additives such as, for example, fillers or siccatives.

Preference is given to the colouring of thermoplastic plastics, especially in the form of granules or mouldings, such as, for example, containers for solid or liquid substances, for example bottles, especially containers and bottles for drinks, more especially for beer. Preferred high molecular weight organic materials that can be coloured in accordance with the invention are generally polymers having a dielectric constant≥ 2.5, especially polyesters, polycarbonate (PC), polystyrene (PS), polymethyl methacrylate (PMMA), polyamide, polyethylene, polypropylene, styrene/acrylonitrile (SAN) and acrylonitrile/butadiene/styrene (ABS).

Special preference is given to polyesters and polyamide. More especially preferred are linear aromatic polyesters, which can be obtained by polycondensation of terephthalic acid and glycols, especially ethylene glycol, or condensation products of terephthalic acid and 1,4-bis(hydroxymethyl)cyclohexane, for example polyethylene terephthalate (PET), polyethylene naphthalate (PEN) or polybutylene terephthalate (PBTP); also polycarbonates, e.g. those from α,α-dimethyl-4,4-dihydroxy-diphenylmethane and phosgene, or polymers based on polyvinyl chloride and also on polyamide, for example polyamide 6 or polyamide 6.6.

Preferably, the dyes of formulae (1) and (2) are used to colour beer bottles of polyethylene terephthalate (PET) or polyethylene naphthalate (PEN), it also being possible for beer bottles that have already been produced to be coloured, for example by spraying on or applying those dyes or a mixture comprising those dyes and a UV absorber.

The materials mentioned hereinabove, especially those of polyester, that have been coloured using the method according to the invention are distinguished by level and tinctorially strong colour shades having very good in-use fastness properties, especially a good light fastness and high temperature light fastness.

The invention relates also to the use of a combination of the dyes of formulae (1) and (2) and a UV absorber in colouring plastics or polymeric particles.

The invention relates furthermore to the plastics coloured in the mass by the methods mentioned hereinabove.

The following Examples serve to illustrate the invention. Unless specified otherwise, the parts are parts by weight and the percentages are percentages by weight. The temperatures are given in degrees Celsius. The relationship between parts by weight and parts by volume is the same as between grams and cubic centimetres.

### Example 1:

1200.00 g of polyester granules (PET Arnite D04-300, DSM) are pre-dried for 4 hours at 130°C and then homogeneously mixed with
0.16 g of the dye of formula (1)
0.22 g of the dye of formula (2),
and
2.4 g of the UV absorber of formula 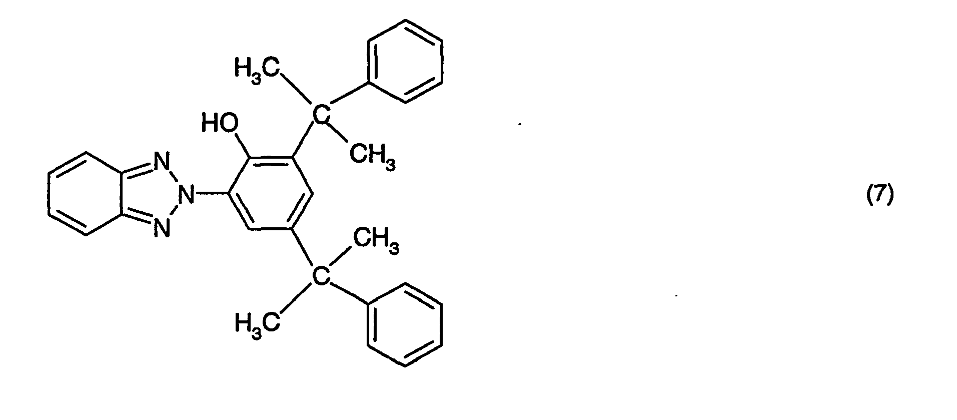
in a roller rack mixing apparatus for 15 minutes, at 60 revs/min.

The homogeneous mixture is extruded in an extruder (25 mm twin screw from Collin, D-85560 Ebersberg) having 6 heating zones at a maximum temperature of 275°C, is cooled with water, granulated in a granulator (Turb Etuve TE 25 from MAPAG AG, CH-3001 Bern) and then dried for 4 hours at 130°C.

Yellow-brown coloured polyester granules having good all-round fastness properties, especially very good light fastness and high temperature light fastness, are obtained.

### Example 2:

1200.00 g of polyester granules (PET Arnite D04-300, DSM) are pre-dried for 4 hours at 130°C and then homogeneously mixed with
0.12 g of the dye of formula (1)
0.18 g of the dye of formula (2),
0.15 g of the dye of formula (6)
and
2.4 g of a UV absorber of formula 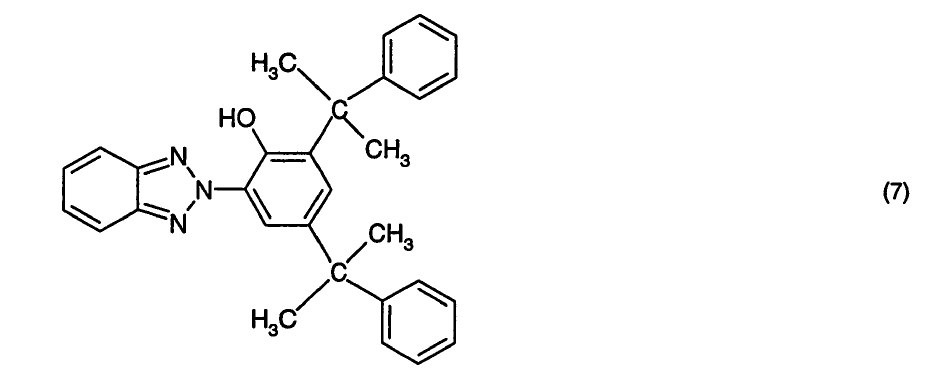
in a roller rack mixing apparatus for 15 minutes, at 60 revs/min.

The homogeneous mixture is extruded in an extruder (25 mm twin screw from Collin, D-85560 Ebersberg) having 6 heating zones at a maximum temperature of 275°C, is cooled with water, granulated in a granulator (Turb Etuve TE 25 from MAPAG AG, CH-3001 Bern) and then dried for 4 hours at 130°C.

Green-coloured polyester granules having good all-round fastness properties, especially very good light fastness and high temperature light fastness, are obtained.

## Claims

1. A method of producing coloured plastics or polymeric colour particles, in which there is used the dye of formula 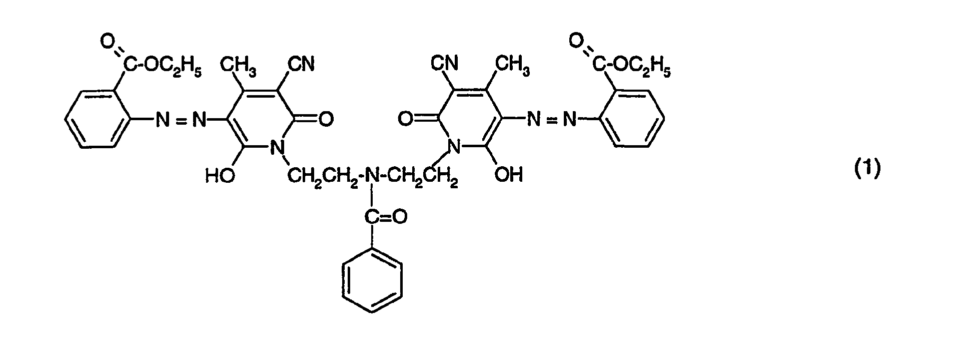 together with the dye of formula 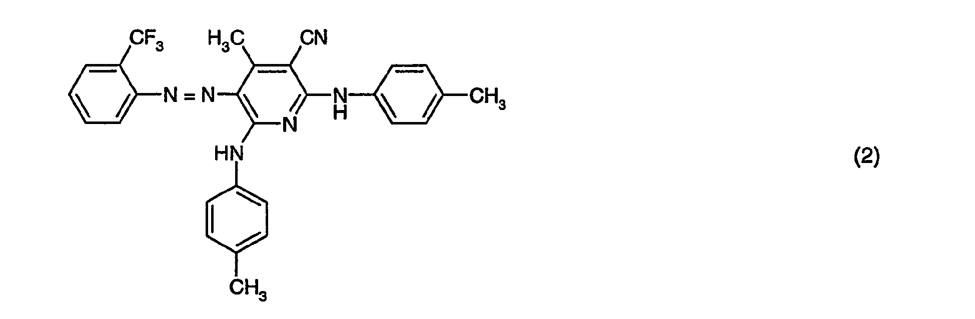 and a UV absorber
and, optionally, further dyes.

2. A method according to claim 1, in which there is used, in addition to the dyes of formulae (1) and (2), the dye of formula

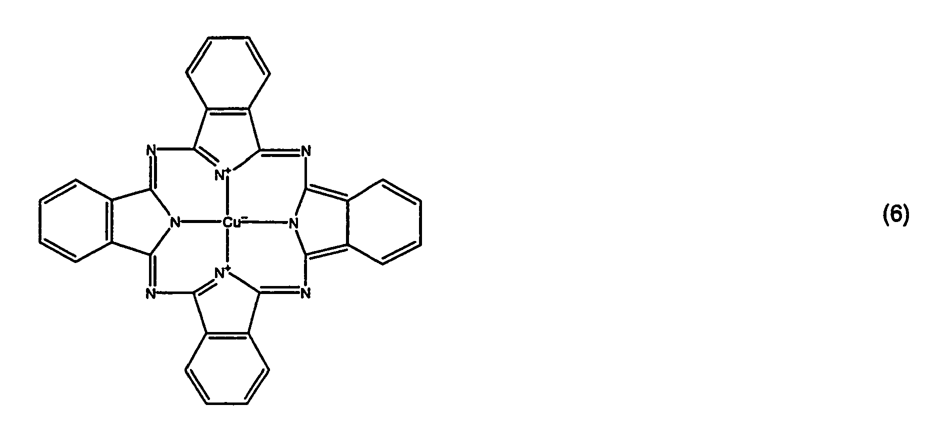

3. A method according to either claim 1 or claim 2, in which there is used, as UV absorber, a UV absorber from the class of the 2-(2'-hydroxyphenyl)benzotriazoles, the 2-hydroxybenzophenones, the esters of substituted or unsubstituted benzoic acid, the acrylates, the oxamides, the 2-(2-hydroxyphenyl)-1,3,5-triazines, the monobenzoates of resorcinol, the formamidines, or a polyester UV absorber of formula 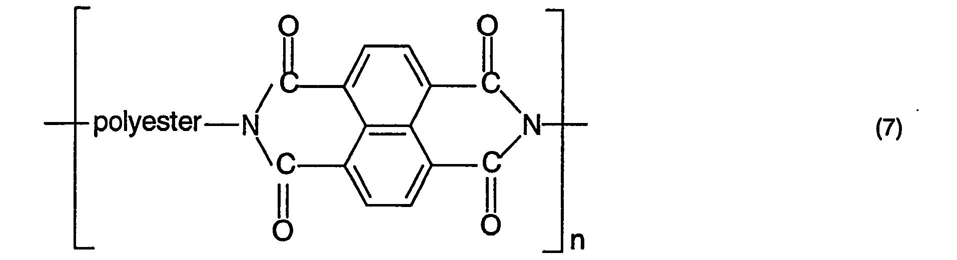 having a specific weight of from 1200 to 1400, preferably from 1300 to 1350, at 25°C.

4. Use of a combination of the dyes of formulae (1) and (2) according to claim 1 and a UV absorber in colouring plastics or polymeric particles.

5. Use of a combination of the dyes of formulae (1), (2) and (6) according to claim 2 and a UV absorber in colouring plastics or polymeric particles.

6. Use according to either claim 4 or claim 5, in which there is used, as UV absorber, a UV absorber from the class of the 2-(2'-hydroxyphenyl)benzotriazoles, the 2-hydroxybenzophenones, the esters of substituted or unsubstituted benzoic acid, the acrylates, the oxamides, the 2-(2-hydroxyphenyl)-1,3,5-triazines, the monobenzoates of resorcinol, the formamidines, or a polyester UV absorber of formula 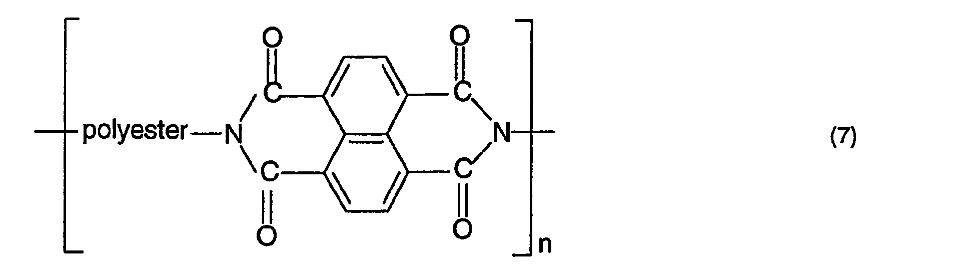 having a specific weight of from 1200 to 1400, preferably from 1300 to 1350, at 25°C.

7. Use of a combination according to any one of claims 4 to 6 in colouring beer bottles of polyethylene terephthalate (PET).

8. Use of a combination according to any one of claims 4 to 6 in colouring beer bottles of polyethylene naphthalate (PEN).

9. Plastics or polymeric particles coloured by a combination according to any one of claims 4 to 6.

10. Beer bottles of polyethylene terephthalate (PET) coloured using a combination according to any one of claims 4 to 6.

11. Beer bottles of polyethylene naphthalate (PEN) coloured using a combination according to any one of claims 4 to 6.

## Patentansprüche

1. Verfahren zur Herstellung gefärbter Kunststoffe oder polymerer Farbpartikel, bei dem man den Farbstoff der Formel 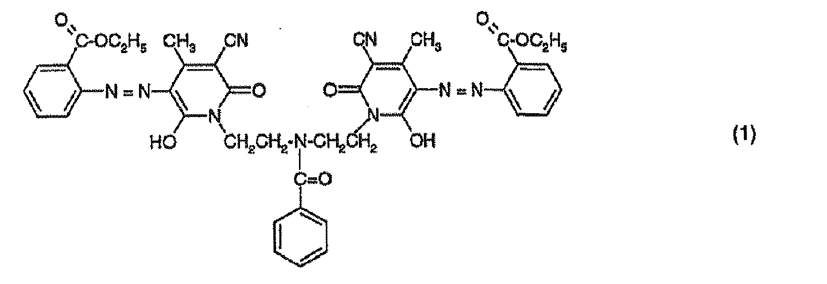 zusammen mit dem Farbstoff der Formel 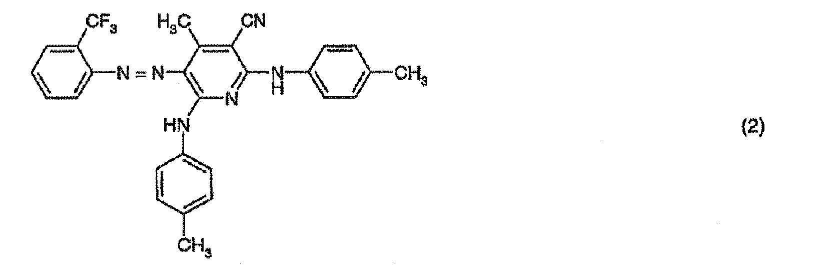 und einem UV-Absorber
und gegebenenfalls weiteren Farbstoffen verwendet.

2. Verfahren nach Anspruch 1, bei dem man zusätzlich zu den Farbstoffen der Formeln (1) und (2) den Farbstoff der Formel 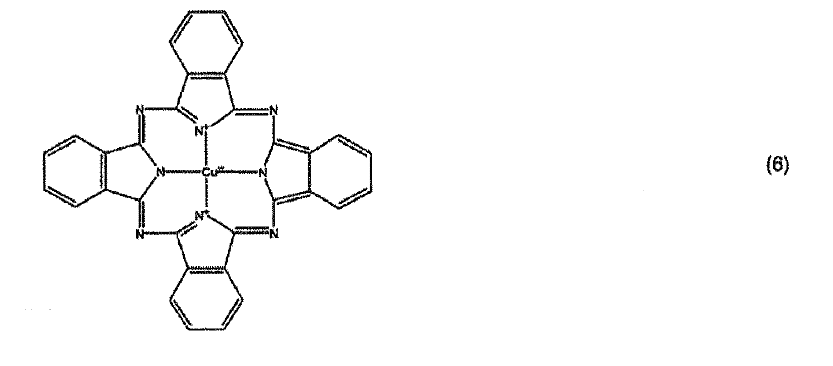 verwendet.

3. Verfahren nach Anspruch 1 oder Anspruch 2, bei dem man als UV-Absorber einen UV-Absorber aus der Klasse der 2-(2'-Hydroxyphenyl)benzotriazole, der 2-Hydroxybenzophenone, der Ester von substituierter oder unsubstituierter Benzoesäure, der Acrylate, der Oxamide, der 2-(2-Hydroxyphenyl)-1,3,5-triazine, der Monobenzoate von Resorcinol, der Formamidine oder einen Polyester-UV-Absorber der Formel 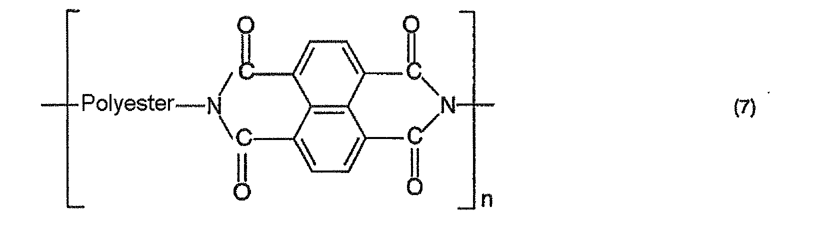 mit einem spezifischen Gewicht von 1200 bis 1400, vorzugsweise von 1300 bis 1350, bei 25°C verwendet.

4. Verwendung einer Kombination aus den Farbstoffen der Formeln (1) und (2) gemäß Anspruch 1 und einem UV-Absorber zum Färben von Kunststoffen oder polymeren Partikeln.

5. Verwendung einer Kombination aus den Farbstoffen der Formeln (1), (2) und (6) gemäß Anspruch 2 und einem UV-Absorber zum Färben von Kunststoffen oder polymeren Partikeln.

6. Verwendung nach Anspruch 4 oder Anspruch 5, bei der man als UV-Absorber einen UV-Absorber aus der Klasse der 2-(2'-Hydroxyphenyl)benzotriazole, der 2-Hydroxybenzophenone, der Ester von substituierter oder unsubstituierter Benzoesäure, der Acrylate, der Oxamide, der 2-(2-Hydroxyphenyl)-1,3,5-triazine, der Monobenzoate von Resorcinol, der Formamidine oder einen Polyester-UV-Absorber der Formel 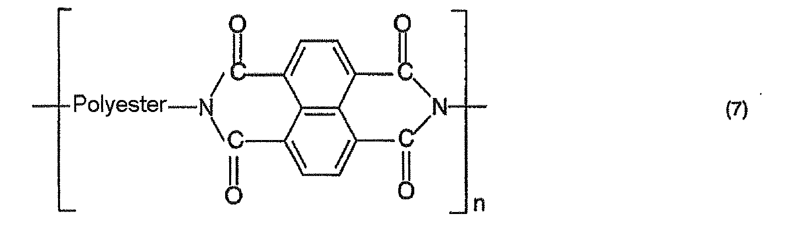 mit einem spezifischen Gewicht von 1200 bis 1400, vorzugsweise von 1300 bis 1350, bei 25°C verwendet.

7. Verwendung einer Kombination gemäß einem der Ansprüche 4 bis 6 zum Färben von Bierflaschen aus Polyethylenterephthalat (PET).

8. Verwendung einer Kombination gemäß einem der Ansprüche 4 bis 6 zum Färben von Bierflaschen aus Polyethylennaphthalat (PEN).

9. Mit einer Kombination gemäß einem der Ansprüche 4 bis 6 gefärbte Kunststoffe oder polymere Partikel.

10. Mit einer Kombination gemäß einem der Ansprüche 4 bis 6 gefärbte Bierflaschen aus Polyethylenterephthalat (PET).

11. Mit einer Kombination gemäß einem der Ansprüche 4 bis 6 gefärbte Bierflaschen aus Polyethylennaphthalat (PEN).

## Revendications

1. Procédé de production de matières plastiques colorées ou de particules polymériques colorées, dans lequel on utilise le colorant de formule 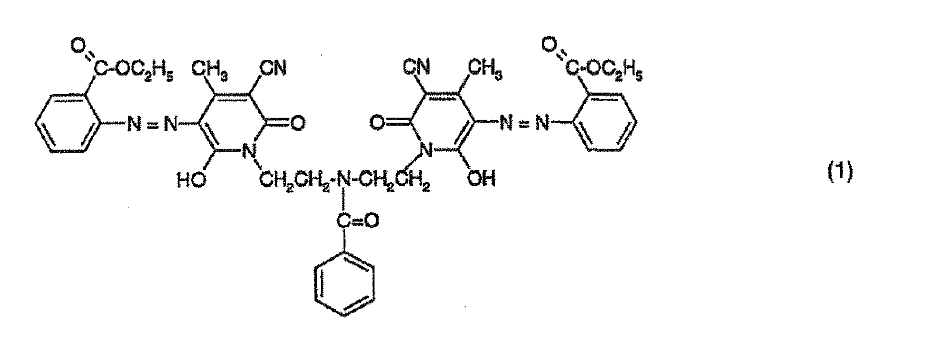 conjointement avec le colorant de formule 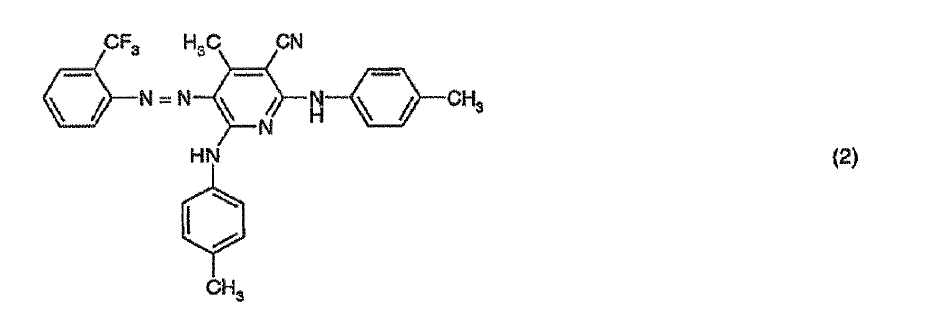 et un absorbeur d'UV
et, facultativement, d'autres colorants.

2. Procédé selon la revendication 1, dans lequel on utilise, en plus des colorants représentés par les formules (1) et (2), le colorant de formule

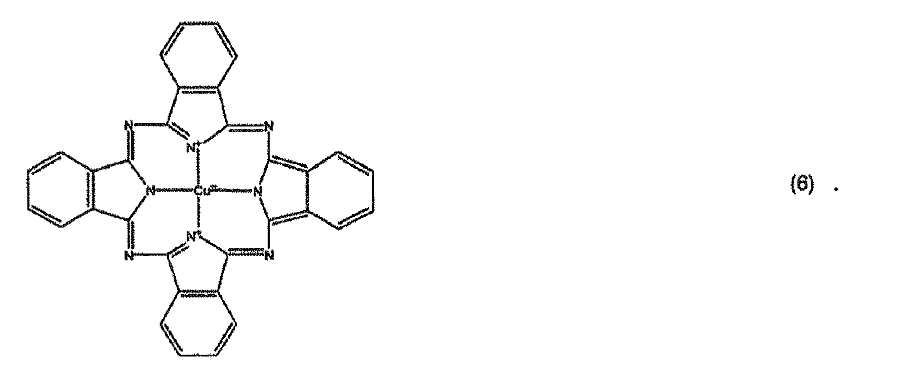

3. Procédé selon l'une ou l'autre de la revendication 1 ou de la revendication 2, dans lequel on utilise, comme absorbeur d'UV, un absorbeur d'UV provenant de la classe des 2-(2'-hydroxyphényl)benzotriazoles, des 2-hydroxybenzophénones, des esters d'acide benzoïque substitué ou non substitué, des acrylates, des oxamides, des 2-(2-hydroxyphényl)-1,3,5-triazines, des monobenzoates de résorcinol, des formamidines, ou un absorbeur d'UV polyester de formule 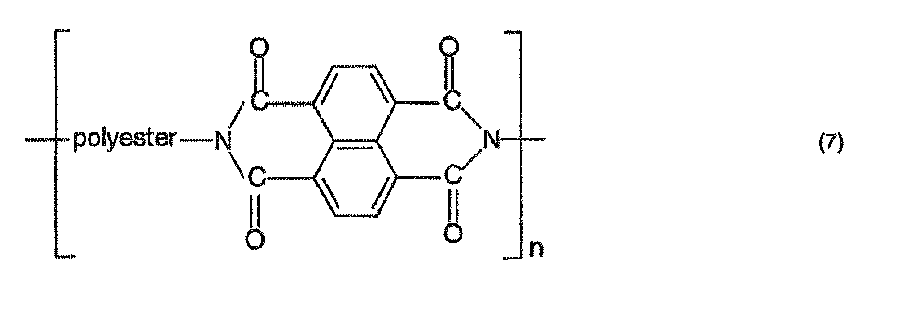 ayant un poids spécifique de 1200 à 1400, de préférence de 1300 à 1350, à 25 °C.

4. Utilisation d'une association des colorants représentés par les formules (1) et (2) selon la revendication 1 et d'un absorbeur d'UV dans la coloration de matières plastiques ou de particules polymériques.

5. Utilisation d'une association des colorants représentés par les formules (1), (2) et (6) selon la revendication 2 et d'un absorbeur d'UV dans la coloration de matières plastiques ou de particules polymériques.

6. Utilisation selon l'une ou l'autre de la revendication 4 ou de la revendication 5, dans laquelle on utilise, comme absorbeur d'UV, un absorbeur d'UV provenant de la classe des 2-(2'-hydroxyphényl)benzotriazoles, des 2-hydroxybenzophénones, des esters d'acide benzoïque substitué ou non substitué, des acrylates, des oxamides, des 2-(2-hydroxyphényl)-1,3,5-triazines, des monobenzoates de résorcinol, des formamidines, ou un absorbeur d'UV polyester de formule 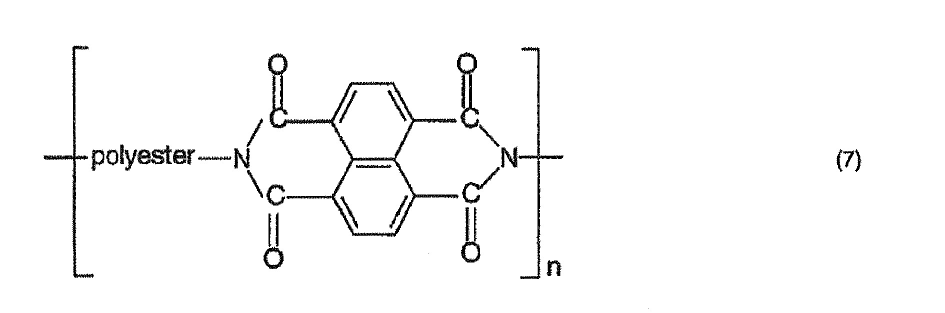 ayant un poids spécifique de 1200 à 1400, de préférence de 1300 à 1350, à 25 °C.

7. Utilisation d'une association selon l'une quelconque des revendications 4 à 6 dans la coloration de bouteilles de bière en poly(téréphtalate d'éthylène) (PET).

8. Utilisation d'une association selon l'une quelconque des revendications 4 à 6 dans la coloration de bouteilles de bière en poly(naphtalate d'éthylène) (PEN).

9. Matières plastiques ou particules polymériques colorées par une association selon l'une quelconque des revendications 4 à 6.

10. Bouteilles de bière en poly(téréphtalate d'éthylène) (PET) colorées à l'aide d'une association selon l'une quelconque des revendications 4 à 6.

11. Bouteilles de bière en poly(naphtalate d'éthylène) (PEN) colorées à l'aide d'une association selon l'une quelconque des revendications 4 à 6.
